(19) Europäisches Patentamt
European Patent Office
Office européen des brevets

(11) EP 0 696 527 B1

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(51) Int. Cl.⁶: **B60Q 1/38**

(21) Anmeldenummer: **95111955.1**

(22) Anmeldetag: **29.07.1995**

(54) **Fahrtrichtungsanzeiger**

Direction indicator

Indicateur de direction

(84) Benannte Vertragsstaaten:
**AT DE FR GB IT**

(30) Priorität: **11.08.1994 DE 4428369**

(43) Veröffentlichungstag der Anmeldung:
**14.02.1996 Patentblatt 1996/07**

(73) Patentinhaber: **DEERE & COMPANY**
**Moline, Illinois 61265 (US)**

(72) Erfinder: **Hollstein, Jürgen**
**D-68259 Mannheim (DE)**

(74) Vertreter:
**Feldmann, Bernhard et al**
**DEERE & COMPANY**
**European Office**
**Patent Department**
**68140 Mannheim (DE)**

(56) Entgegenhaltungen:
**WO-A-95/33633**

- **RESEARCH DISCLOSURE, Nr. 283, November 1987, NEW YORK, Seite 645 XP002002313 DECLAIRE: "turn signal cancellation with vehicle speed controlled angle"**

**Beschreibung**

Die Erfindung betrifft den Fahrtrichtungsanzeiger eines Fahrzeuges mit auf beiden Fahrzeugseiten angebrachten Fahrtrichtungsanzeigeleuchten, mit einem manuell betätigbaren Blinkerhebel, und mit einer Blinkgebersteuerung gemäß dem Oberbegriff des Patentanspruchs 1.

Insbesondere Personenkraftwagen weisen Abschaltsysteme für die Fahrtrichtungsanzeiger auf, die den Blinkerhebel mechanisch in die Neutrallage zurückbewegen, sobald das Lenkrad aus seiner Kurvenstellung in die Geradeausstellung zurückgedreht wird. Ferner ist durch die DE-A-27 28 061 ein Lenkstockschalter bekannt geworden, bei dem die Blinkerrückstellung berührungslos erfolgt, indem Reed-Kontakte mittels auf der Lenksäule angeordnete Dauermagnete ausgelöst werden. Derartige Abschaltsysteme können bei einer hydraulischen Lenkung, wie sie bei landwirtschaftlichen und industriellen Fahrzeugen häufig Anwendung findet und bei denen keine feste Zuordnung zwischen der Lenkradstellung und dem Lenkradeinschlag gegeben ist, zu einem frühzeitigen oder verspäteten Abschalten des Fahrtrichtungsanzeigers führen und sind daher nicht immer geeignet.

Erfolgt die Abschaltung der Fahrtrichtungsanzeige automatisch nach Ablauf einer vorgegebenen Zeit, so kann dies zu einer zu frühen Unterbrechung des Blinkmodus führen, wenn das Fahrzeug langsam fährt oder beispielsweise an einer Signalanlage warten muß. Die Verwendung von Lenkwinkelsensoren für die Steuerung der Abschaltung ist relativ aufwendig und nachteilig, da das System auch auf Lenkbewegungen ansprechen kann, die noch nicht das Ende des Abbiegevorganges markieren.

Durch die DE-A-34 42 205 ist eine Richtungsanzeigeeinrichtung für Landfahrzeuge der eingangs genannten Art bekannt geworden, bei der ohne Überwachung durch den Fahrer und ohne mechanische Rückstellung das Blinken nach der Auslösung durch den Fahrer eine angemessene Zeit andauert und dann automatisch beendet wird. Die Blinkdauer hängt dabei von der Fahrgeschwindigkeit ab. Zur Betätigung der Richtungsblinklichter genügt es, wenn der Fahrer den Richtungsanzeigeschalter nur kurzzeitig in die gewünschte Auslenkstellung bringt, ihn also nur antippt. Wenn lediglich ein kurzfristiges Blinken erfolgen oder wenn das Blinken vorzeitig beendet werden soll, ist ein eigens hierfür vorgesehener Beendigungsschalter zu betätigen. Diese Betätigung erfordert eine erneute Bedienung durch den Fahrer und beansprucht dessen Aufmerksamkeit. Ferner erhöht der besondere Beendigungsschalter die Herstellungskosten der Richtungsanzeigeeinrichtung.

Die US-A-4,972,174 beschreibt den Schaltkreis für eine Fahrtrichtungsanzeige, die für Motorräder vorgesehen ist. Auch hier hängt die Blinkdauer von der Fahrgeschwindigkeit ab. Sie nimmt mit steigenden Fahrgeschwindigkeiten zu. Um nur kurzzeitig zu blinken oder um das Blinken vorzeitig zu unterbrechen muß der Fahrer einen rechten und/oder linken Blinkknopf erneut betätigen, was auch hier die Aufmerksamkeit des Fahrers wiederholt beansprucht.

Die der Erfindung zugrunde liegende Aufgabe wird darin gesehen, einen Fahrtrichtungsanzeiger anzugeben, durch den die genannten Probleme überwunden und Nachteile vermieden werden, der insbesondere vielseitig mit Erfolg anwendbar ist und sich technisch durch einfache, kostengünstige Mittel realisieren läßt.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Der erfindungsgemäße Fahrtrichtungsanzeiger erlaubt es, durch kurzzeitiges Betätigen des Blinkerhebels einen automatischen Abschaltmodus zu aktivieren. Der Blinkerhebel ist hierzu nur kurz anzutippen. Er kann auch in eine Rastposition verstellt werden, muß dann jedoch innerhalb einer kurzen Zeitdauer, beispielsweise einer Sekunde, in seine Neutrallage zurückbewegt werden. Die Betätigungszeitspanne zur Auslösung des automatischen Abschaltmodus der Blinkerfunktion beträgt vorzugsweise mindestens 0,1 Sekunden und höchstens 1 Sekunde.

Verharrt der Blinkerhebel für längere Zeit in der Auslenkstellung, so bleibt der Blinkmodus nur so lange eingeschaltet, wie sich der Blinkerhebel in der Auslenkstellung befindet (normale Blinkfunktion). In der normalen Blinkfunktion ist der Fahrtrichtungsanzeiger so lange aktiv, bis der Blinkerhebel in seine Neutrallage zurückgebracht ist.

Die erfindungsgemäße Ausgestaltung hat den Vorteil, daß die Bedienungsperson wählen kann, ob Sie die Zeitdauer des Blinkmodus selbst bestimmen will (Blinkhebel wird während der gewünschten Zeitdauer betätigt oder in eine Rastposition gebracht, wobei die Betätigungszeitdauer nicht zu kurz sein darf) oder ob der Blinkmodus nach einer Zeitspanne, die von der Fahrzeuggeschwindigkeit abhängt, automatisch abgeschaltet werden soll (nur kurzzzeitiges Betätigen des Blinkhebels). Zusätzliche Bedienungselemente, wie Schalter, sind für die Bereitstellung dieser Funktionen nicht erforderlich.

Liegt ein kurzzeitiges Blinkerhebelsignal vor, so berechnet die Steuereinheit eine zur augenblicklichen Fahrgeschwindigkeit passende Blinkdauer und aktiviert für diese Blinkdauer den Blinkmodus. Bei langsam fahrendem Fahrzeug bleibt der Blinkmodus relativ lange eingeschaltet, während er bei schnell fahrendem Fahrzeug relativ rasch abgebrochen wird.

Vorzugsweise erfolgt während der Ausführung des Abschaltmodus eine laufende Anpassung der Blinkdauer an die aktuelle Fahrzeuggeschwindigkeit, so daß das System auf sich ändernde Fahrzeuggeschwindigkeiten reagieren und eine angemessene Blinkdauer vorgeben kann.

Um es der Bedienungsperson zu ermöglichen, den Blinkmodus vor Ablauf der durch den Abschaltmodus eingestellten Blinkdauer abzubrechen, schlägt eine Weiterbildung der Erfindung vor, daß der Abschaltmodus durch nochmaliges Betätigen des Blinkerhebels in die erste Auslenkstellung frühzeitig abgeschaltet und der Blinkmodus damit abgebrochen wird.

Ferner ist es zweckmäßig, den Abschaltmodus und den Blinkmodus zu unterbrechen, sofern der Blinkerhebel in die zweite Auslenkrichtung verstellt wird. Erfolgt dies kurzzeitig, so wird ein Blinkmodus für die der zweiten Auslenkrichtung zugeordneten Fahrtrichtungsanzeigeleuchten sowie der erfindungsgemäße Abschaltmodus aktiviert. Bei längerer Betätigung des Blinkerhebels wird lediglich die normale Blinkfunktion eingestellt und der Abschaltmodus deaktiviert.

Um die Bedienungsperson über das automatische Abschalten des Fahrtrichtungsanzeigers insbesondere im Abschaltmodus zu informieren, ist es vorteilhaft, während der gesamten Blinkdauer ein akustisches Signal in der Frequenz des Blinkrhythmus zu erzeugen, welches mit automatischem Abschalten des Fahrtrichtungsanzeigers ebenfalls erlischt. Ferner können Signalleuchten in der Fahrzeugkabine die Richtung und Blinkfrequenz wiedergeben.

Gemäß einer bevorzugten Ausgestaltung der Erfindung stellt die Blinkdauer eine von Hand programmierbare Treppenfunktion über die Fahrgeschwindigkeit dar.

Eine vorteilhafte weitere Ausgestaltung sieht vor, daß durch die Blinkgebersteuerung die Blinkdauer T (in Sekunden) anhand nachfolgender Funktion bestimmt wird:

$$T = Tp + (Tv / (W + V)) \tag{1}$$

Dabei sind Tp, Tv und W vorgebbare Konstanten, und V ist der Betrag der gemessenen Fahrzeuggeschwindigkeit in km/h. Die Konstanten können für einen Ackerschlepper beispielsweise folgende Werte einnehmen: Tp = 60, Tv = 120 und W = 1. Die minimale Blinkdauer beträgt damit eine Minute und die maximale Blinkdauer beträgt drei Minuten (bei stehendem Fahrzeug).

Die oben angegebene Funktion (1) läßt sich aus der Definition der Geschwindigkeit (Geschwindigkeit V gleich Weg durch Zeit T) ableiten. Tp stellt eine Mindestblinkdauer dar, während ein positiver W-Wert verhindert, daß bei stehendem Fahrzeug eine Division durch Null erfolgt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1     die schematische Aufsicht eines Schleppers mit Fahrtrichtungsanzeigeleuchten,

Fig. 2     das Schaltungsschema einer erfindungsgemäßen Fahrtrichtungsanzeige,

Fig. 3     ein Zustandsdiagramm der Blinkersteuerung und

Fig. 4     ein Diagramm, das die funktionelle Abhängigkeit der Blinkdauer bzw. der während der Blinkdauer überfahrenen Wegstrecke von der Geschwindigkeit darstellt.

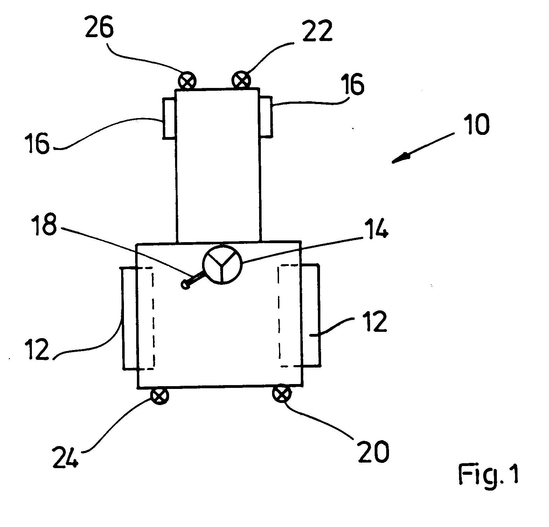

Der in Fig. 1 dargestellte Schlepper 10 enthält zwei angetriebene Hinterräder 12, zwei durch ein Lenkrad 14 lenkbare Vorderräder 16, einen Blinkerhebel 18 und eine hintere und eine vordere, rechte Fahrtrichtungsanzeigeleuchte 20, 22 sowie eine hintere und vordere, linke Fahrtrichtungsanzeigeleuchte 24, 26.

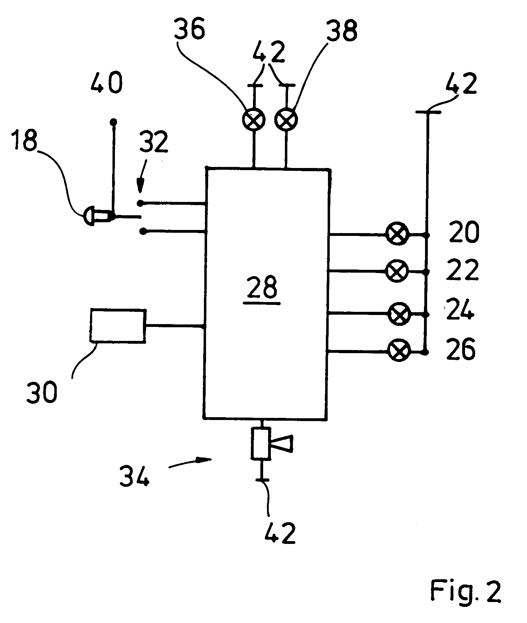

Wie aus Fig. 2 ersichtlich, ist eine elektronische Steuereinheit 28 elektrisch mit den rechten und linken Fahrtrichtungsanzeigeleuchten 20, 22, 24, 26, einem Geschwindigkeitssensor 30, einem durch den Blinkerhebel 18 betätigbaren Schalter 32, einem akustischen Signalgeber 34, einer rechten Signalleuchte 36 und einer linken Signalleuchte 38 verbunden. Der Schalter 32 steht mit einer Spannungsquelle 40 und die Fahrtrichtungsanzeigeleuchten 20, 22, 24, 26 (auch Blinkleuchten genannt) sowie der akustische Signalgeber 34 und die Signalleuchten 36, 38 mit dem Fahrzeugchassis 42 in Verbindung.

Die Steuereinheit 28 ist eine programmierbare elektronische Steuereinheit mit Festspeicher, die einen Blinkfrequenzgenerator mit einer Frequenz von beispielsweise 90 Impulsen pro Minute und Ansteuerrelais für die rechten und linken Blinkleuchten 20, 22, 24, 26 enthält. Bei dem Schalter 32 handelt es sich um einen Rastschalter, der sich aus der dargestellten Mittelstellung in zwei Auslenkrichtungen (rechts und links) verstellen läßt und in diesen so lange einrastet, bis er von Hand in die Neutralstellung zurückbewegt wird. Der Geschwindigkeitssensor 30 ist auf übliche Weise an der Fahrzeughinterachse angebracht.

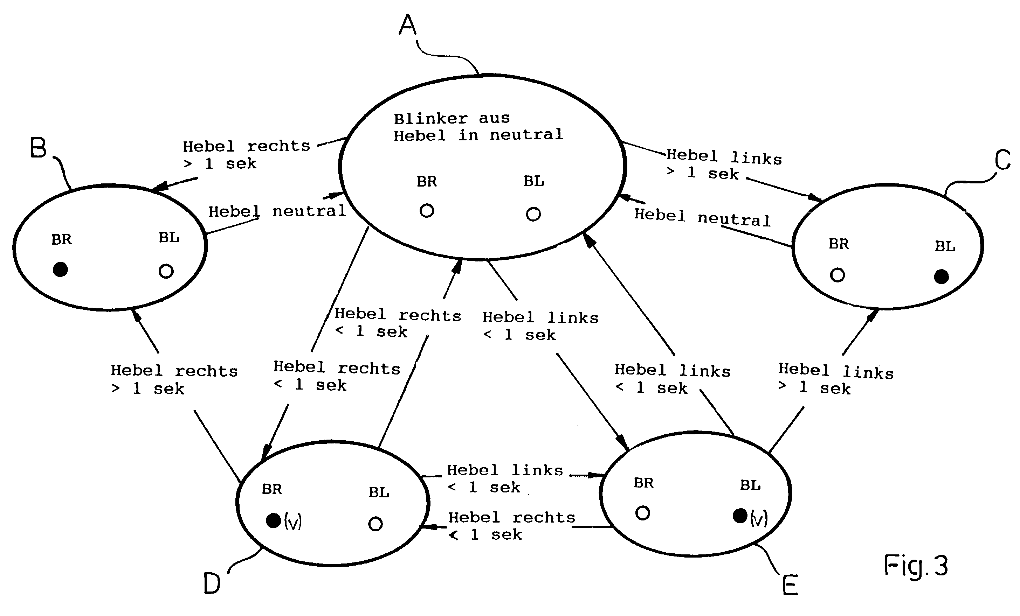

Die aufgrund der Stellung des Schalters 32 und des Geschwindigkeitsmeßwertes durch die Steuereinheit 28 vorgenommene Ansteuerung der Blinkleuchten 20, 22, 24, 26 wird anhand des Zustandsdiagramms der Fig. 3 im folgenden näher erläutert. In dem Zustandsdiagramm sind fünf Zustände A, B, C, D und E angedeutet, die durch entsprechende Manipulation des Blinkerhebels 18 jeweils in Pfeilrichtung ineinander überführbar sind. In den Zustandskreisen sind die rechten Blinkleuchten 20, 22 mit BR und die linken Blinkleuchten 24, 26 mit BL bezeichnet. Die kleinen leeren Kreise bedeuten, daß die Blinkleuchten BR, BL aus sind, die ausgefüllten Kreise bedeuten, daß die Blinkleuchten BR, BL mit einem vorgebbaren Blinkrhythmus aufblinken, und die ausgefüllten Kreise mit Markierung bedeuten, daß die Blinkleuchten BR, BL blinken und der Abschaltmodus aktiviert ist, so daß die Blinkleuchten BR, BL nach Ablauf einer Blinkdauer erlöschen.

Der Zustand A ist der Grundzustand, bei dem sich der Blinkerhebel 18 in seiner mittleren Neutralstellung befindet und alle Blinkleuchten BR, BL aus sind. Durch eine Betätigung des Blinkerhebels 18 nach rechts, die länger als eine Sekunde anhält, erfolgt ein Übergang in den Zustand B, in dem lediglich die rechten Blinkleuchten BR blinken; kehrt der Blinkerhebel 18 wieder in seine Neutralstellung zurück, so wird wieder der Grundzustand A eingenommen, und die rechten Blinkleuchten BR erlöschen. Entsprechend kann durch eine längerfristige Betätigung des Blinkerschalters nach links der Zustand C erreicht werden, in welchem lediglich die linken Blinkleuchten BL blinken, solange sich der Blinkerhebel 18 in seiner linken Lage befindet.

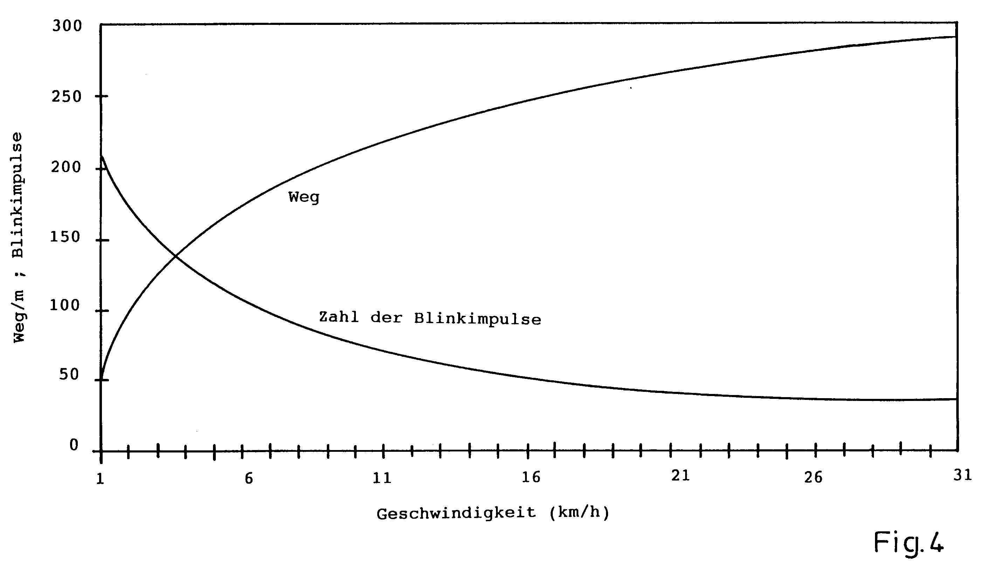

Wird der Blinkerhebel 18 aus seiner Neutralstellung lediglich kurzzeitig (länger als 0,1 sec, jedoch kürzer als 1 sec) in seine rechte Stellung gebracht, so geht der Grundzustand A in den Zustand D über. Im Zustand D wird ein Abschaltmodus in Gang gesetzt, der die rechten Blinkleuchten BR für eine Blinkdauer aktiviert, die von der Fahrzeuggeschwindigkeit abhängt. Der Zusammenhang zwischen Fahrzeuggeschwindigkeit und Blinkdauer wird später anhand der Fig. 4 erläutert. Nach Ablauf der Blinkdauer erlöschen die rechten Blinkleuchten BR.

Der Zustand D kann jeder Zeit durch Auslenken des Blinkerhebels 18 aus seiner Neutralstellung verlassen werden. Durch längere (> 1 sec) Auslenkung nach rechts wird der bereits beschriebene Zustand B erreicht, durch kurzzeitige (< 1 sec) Auslenkung nach rechts kehrt das System in seinen Grundzustand A zurück und durch kurzzeitige (< 1 sec) Auslenkung nach links wird ein Zustand E eingenommen, in dem die linken Blinkleuchten BL für eine durch einen Abschaltmodus bestimmte Zeitdauer blinken.

Wird der Blinkerhebel 18 aus seiner Neutralstellung lediglich kurzzeitig (länger als 0,1 sec, jedoch kürzer als 1 sec) in seine linke Stellung gebracht, so geht der Grundzustand A in den Zustand E über. Im Zustand E wird ein Abschaltmodus in Gang gesetzt, der die linken Blinkleuchten BL für eine Blinkdauer aktiviert, die von der Fahrzeuggeschwindigkeit abhängt (siehe Fig. 4). Nach Ablauf der Blinkdauer erlöschen die linken Blinkleuchten BL.

Der Zustand E kann jeder Zeit durch Auslenken des Blinkerhebels 18 aus seiner Neutralstellung verlassen werden. Durch längere (> 1 sec) Auslenkung nach links wird der bereits beschriebene Zustand C erreicht, durch kurzzeitige (< 1 sec) Auslenkung nach links kehrt das System in seinen Grundzustand A zurück, und durch kurzzeitige (< 1 sec) Auslenkung nach rechts wird der bereits beschriebene Zustand D eingenommen, in dem die rechten Blinkleuchten BR für eine durch einen Abschaltmodus bestimmte Zeitdauer blinken.

Durch die Steuereinheit 28 werden gleichzeitig mit dem Aktivieren eines Blinkmodus ein akustischer Signalgeber 34 und eine rechte oder eine linke Signalleuchte 36, 38 auf der Anzeigekonsole in der Fahrzeugkabine angesteuert, so daß die Bedienungsperson für die Blinkdauer sowohl akustische als auch sichtbare Signale in der Frequenz des Blinkmodus erhält.

In der Fig. 4 ist über der in km/h angegebenen Fahrzeuggeschwindigkeit einerseits die Wegstrecke in Metern, die während der Blinkdauer im Abschaltmodus von dem Fahrzeug zurückgelegt wird, und andererseits die Anzahl der Blinkimpulse während der Ausführung des Abschaltmodus aufgetragen. Die Anzahl der Blinkimpulse läßt sich aus der Blinkdauer im Abschaltmodus und der Blinkfrequenz berechnen. Der in Fig. 4 dargestellte funktionelle Zusammenhang geht auf die in der Beschreibungseinleitung angegebenen Funktion (1) sowie die dort angegebenen Werte zurück. Als Fahrzeuggeschwindigkeit V wurde der in km/h gemessene Wert dividiert durch 4 eingesetzt.

Alternativ zu einer Steuerung aufgrund der Funktion (1) kann sich die Steuerung auch auf eine Treppenfunktion stützen. Ist der Abschaltmodus durch kurzzeitige (0,1 bis 1,0 sec) Betätigung des Blinkerhebels 18 aktiviert, so beginnen die Blinkleuchten für eine bestimmte Anzahl von Blinkimpulsen zu blinken. Die Anzahl der Treppenstufen kann beispielsweise 20 betragen. Dabei ist jedem Fahrgeschwindigkeitsintervall von z. B. 2 km/h eine bestimmte Anzahl von Blinkimpulsen zugeordnet. Die Anzahl der Blinkimpulse entspricht einer bestimmten Blinkdauer.

Beispielsweise hängt die Anzahl A der Blinkimpulse wie folgt von der Fahrzeuggeschwindigkeit V (km/h) ab:

| V: | 0-2 | 2-3 | 3-4 | 4-5 | 5-6 | 6-7 | 7-8 | 8-9 |
|---|---|---|---|---|---|---|---|---|
| A: | 180 | 48 | 39 | 33 | 29 | 26 | 23 | 21 |
| V: | 9-10 | 10-11 | 11-12 | 12-13 | 13-14 | 14-16 | 16-17 | 17-20 |
| A: | 19 | 18 | 17 | 16 | 15 | 14 | 13 | 12 |
| V: | 20-23 | 23-26 | 26-31 | >31 | | | | |

(fortgesetzt)

| A: | 11 | 10 | 9 | 8 | | | | |
|---|---|---|---|---|---|---|---|---|

Fährt das Fahrzeug mit einer Geschwindigkeit zwischen 20 und 23 km/h und wird der Blinkhebel für 0,1 bis 1,0 sec betätigt, so beginnen die Fahrtrichtungsanzeigeleuchten zu blinken. Ferner wird ein erster Zähler auf den Sollwert 11 eingestellt sowie ein Abschaltmodus aktiviert, in dem der erste Zähler die Blinkimpulse zählt und bei Erreichen des Sollwertes von 11 Blinkimpulsen den Blinkmodus abschaltet. Wird während der Dauer des Abschaltmodus (d. h. bevor der Zähler seinen Sollwert von 11 erreicht) die Fahrgeschwindigkeit verändert, beispielsweise bei Annäherung an eine Ampel verringert, so wird der Sollwert des ersten Zählers automatisch angepaßt und entsprechend oben stehender Tabelle erhöht bis sich bei einer Geschwindigkeit von 2 - 3 km/h ein Sollwert von 48 ergibt.

Fällt die Fahrzeuggeschwindigkeit unter 2 km/h, so wird der aktuelle Zählerstand des ersten Zählers abgespeichert und ein zweiter Zähler beginnt von Null zu zählen. Der Sollwert des zweiten Zählers beträgt 180, d. h. nach 180 Blinkimpulsen wird der Blinkmodus unterbrochen. Sollte das Fahrzeug vor Ablauf der 180 Blinkimpulse beschleunigt werden und eine Geschwindigkeit über 2 km/h erreichen, so wird wieder der erste Zähler aktiviert, der ausgehend von seinem abgespeicherten Zählerstand weiter zählt bis sein gemäß der oben stehenden Tabelle an die Fahrzeuggeschwindigkeit angepaßter Sollwert erreicht wird. Mit Erreichen des Sollwertes wird der Blinkmodus abgeschaltet.

Kurz gesagt, die Blinkimpulse werden vorzugsweise in 2 unabhängigen Impulszählern abgearbeitet. Der erste Zähler zählt die Impulse für Geschwindigkeiten, die größer als z. B. 2 km/h sind, während der zweite Zähler die Impulse für Geschwindigkeiten unter z. B. 2 km/h zählt. Hat einer der beiden Zähler die aus der Treppenfunktion (Tabelle) ermittelbare Anzahl der Blinkimpulse erreicht, so setzt der Abschaltmodus den Blinker zurück.

**Patentansprüche**

1. Fahrtrichtungsanzeiger eines Fahrzeuges (10) mit auf beiden Fahrzeugseiten angebrachten Fahrtrichtungsanzeigeleuchten (20, 22, 24, 26), mit einem manuell betätigbaren Blinkerhebel (18), und mit einer Blinkgebersteuerung (28), die bei Verstellen des Blinkerhebels (18) aus der Neutralstellung in eine erste Auslenkrichtung einen Blinkmodus aktiviert, bei dem an die der ersten Auslenkrichtung zugeordneten Fahrtrichtungsanzeigeleuchten (20, 22; 24, 26) Blinkerimpulse zum intervallweisen Aufblinken abgegeben werden, und die Mittel zur Erfassung der Fahrzeuggeschwindigkeit sowie Mittel zur Aktivierung eines automatischen Abschaltmodus aufweist, durch den nach Ablauf einer von der aktuellen Fahrgeschwindigkeit abhängenden Blinkdauer der Blinkmodus automatisch unterbrochen wird, dadurch gekennzeichnet, daß die Blinkgebersteuerung (28) Mittel aufweist, durch die lediglich durch kurzzeitige Betätigung des Blinkerhebels (18) der automatische Abschaltmodus aktivierbar ist, während bei länger anhaltender Betätigung des Blinkerhebels (18) eine normale Blinkfunktion wirksam wird, bei der der Blinkmodus nur während ausgelenktem Blinkerhebel (18) wirksam ist.

2. Fahrtrichtungsanzeiger nach Anspruch 1, dadurch gekennzeichnet, daß die Betätigungszeitspanne zur Auslösung des automatischen Abschaltmodus der Blinkerfunktion mindestens 0,1 sec und höchstens 1,0 sec beträgt.

3. Fahrtrichtungsanzeiger nach Anspruch 1 oder 2, dadurch gekennzeichnet, daß die Blinkgebersteuerung (28) Mittel zum ständigen Anpassen der von ihr ermittelten Blinkdauer an die aktuelle Fahrzeuggeschwindigkeit aufweist, die wirksam sind, so lange der Abschaltmodus aktiv ist.

4. Fahrtrichtungsanzeiger nach einem der Ansprüche 1 bis 3, dadurch gekennzeichnet, daß die Blinkgebersteuerung (28) Mittel aufweist, durch die der automatische Abschaltmodus durch nochmalige kurzzeitige Betätigung des Blinkerhebels (18) in die erste Auslenkrichtung aufhebbar ist.

5. Fahrtrichtungsanzeiger nach einem der Ansprüche 1 bis 4, dadurch gekennzeichnet, daß die Blinkgebersteuerung (28) Mittel enthält, durch die durch kurzzeitige Betätigung des Blinkerhebels (18) in eine zweite Auslenkrichtung der Blinkmodus für die erste Auslenkrichtung abbrechbar und ein Blinkmodus mit automatischem Abschaltmodus für die der zweiten Auslenkrichtung zugeordneten Fahrtrichtungsanzeigeleuchten (24, 26; 20, 22) aktivierbar ist.

6. Fahrtrichtungsanzeiger nach einem der Ansprüche 1 bis 5, dadurch gekennzeichnet, daß die Blinkdauer eine Treppenfunktion der Fahrgeschwindigkeit darstellt.

7. Fahrtrichtungsanzeiger nach einem der Ansprüche 1 bis 6, dadurch gekennzeichnet, daß durch die Blinkgebersteuerung die Blinkdauer anhand nachfolgender Funktion bestimmt wird:

$$T = Tp + (Tv / (W + V))$$

wobei Tp, Tv und W vorgebbare Konstanten und V die Fahrgeschwindigkeit ist.

8. Fahrtrichtungsanzeiger nach einem der Ansprüche 1 bis 7, dadurch gekennzeichnet, daß Mittel (34) zur Erzeugung eines akustischen Signals während der Blinkdauer vorgesehen sind.

**Claims**

1. A direction indicator of a vehicle (10) with direction indicator lights (20, 22, 24, 26) disposed on the two sides of the vehicle, with a manually operable flasher lever (18) and a flasher controller (28) which activates a flashing mode on movement of the flasher lever (18) out of the neutral position in a first turn direction, in which mode flashing pulses for intermittent flashing are issued to the direction of travel indicator lights (20, 22; 24, 26) associated with the first turn direction, and which comprises means for detecting the vehicle speed and means for activation an automatic switch off mode, through which the flashing mode is automatically terminated after passage of a flashing duration dependent on the current vehicle speed, characterized in that the flasher controller (28) comprises means through which the automatic switch off mode can be activated simply by brief actuation of the flasher lever (18), while a normal flasher function becomes effective with a more prolonged actuation of the flasher lever (18), in which the flashing mode is only effective with the flasher lever (18) turned.

2. A direction indicator according to claim 1, characterized in that the duration of actuation for initiating the automatic switch off mode of the flasher function amounts to at least 0.1 sec. and 1.0 sec. at the most.

3. A direction indicator according to claim 1 or 2, characterized in that the flasher controller (28) comprises means for constantly adapting the flashing duration determined thereby to the current vehicle speed, which means are operative so long as the switch off mode is active.

4. A direction indicator according to any of claims 1 to 3, characterized in that the flasher controller (28) comprises means through which the automatic switch off mode can be cancelled by repeated brief actuation of the flasher lever (18) in the first turn direction.

5. A direction indicator according to any of claims 1 to 4, characterized in that the flasher controller (28) included means through which the flasher mode for the first turn direction can be aborted by brief actuation of the flasher lever (18) in a second turn direction and a flasher mode with automatic switch off mode for the direction indicator lights (24, 26; 20, 22) associated with the second turn direction can be activated.

6. A direction indicator according to any of claims 1 to 5, characterized in that the flashing duration is a step function of the vehicle speed.

7. A direction indicator according to any of claims 1 to 6, characterized in that the flashing duration is determined by the flasher control in accordance with the following function:

$$T = Tp + (Tv/W + V))$$

where Tp, Tv and W are predetermined constants and V is the vehicle speed.

8. A direction indicator according to any of claims 1 to 7, characterized in that means (34) are provided for generating an acoustic signal during the flashing period.

**Revendications**

1. Indicateur de direction d'un véhicule (10) comportant des feux-indicateurs de direction (20, 22, 24, 26) installés sur les deux côtés du véhicule, un levier (19) des clignotants pouvant être actionné manuellement, et une centrale de clignotement (28) qui, lors du déplacement du levier (18) des clignotants depuis la position neutre dans une première direction de déviation, active un mode de clignotement, lors duquel des impulsions de clignotement sont délivrées, pour réaliser un clignotement par intervalles, aux feux-indicateurs de direction (20, 22 ; 24, 26) associés à la première direction de déviation, et qui comporte des moyens pour activer un mode de débranchement automatique, à l'aide duquel le mode de clignotement est automatiquement interrompu après l'écoulement d'une durée de clignotement qui dépend de la vitesse actuelle de déplacement, caractérisé en ce que la centrale de clignotement (28) comprend des moyens, à l'aide desquels le débranchement automatique peut être activé uniquement au moyen d'un actionnement de brève durée du levier (18) des clignotants, alors que, dans le cas d'un actionnement du levier (18) des clignotants pendant une durée plus longue, une fonction normale de clignotement devient active, fonction avec laquelle le mode de clignotement n'est actif que pendant que le levier (18) des clignotants est dévié.

2. Indicateur de direction selon la revendication 1, caractérisé en ce que l'intervalle de temps d'actionnement pour le déclenchement du mode de déclenchement automatique de la fonction de clignotement est égal au moins à 0,1 s et au maximum à 1,0 s.

3. Indicateur de direction selon la revendication 1 ou 2, caractérisé en ce que la centrale de clignotement (28) comporte des moyens pour adapter en permanence la durée de clignotement, qu'elle détermine, à la vitesse actuelle du véhicule, ces moyens étant actifs tant que le mode de débranchement est actif

4. Indicateur de direction selon l'une des revendications 1 à 3, caractérisé en ce que la centrale de clignotement (28) comprend des moyens, à l'aide desquels le mode de débranchement automatique peut être supprimé au moyen d'un actionnement réitéré de brève durée du levier (18) des clignotants dans la première direction de déviation.

5. Indicateur de direction selon l'une des revendications 1 à 4, caractérisé en ce que la centrale de clignotement (28) contient des moyens, à l'aide desquels le mode de clignotement pour la première direction de déviation peut être interrompu au moyen d'un actionnement de brève durée du levier (18) des clignotants dans une seconde direction de déviation, et un mode de clignotement peut être activé avec un mode de débranchement automatique pour les feux-indicateurs de direction (24, 26 ; 20, 22) associés à la seconde direction de déviation.

6. Indicateur de direction selon l'une des revendications 1 à 5, caractérisé en ce que la durée de clignotement représente une fonction en escalier de la vitesse de déplacement.

7. Indicateur de direction selon l'une des revendications 1 à 6, caractérisé en ce que la centrale de clignotement détermine la durée de clignotement conformément à la relation suivante :

$$T = Tp + (Tv/(W+V))$$

Tp, Tv et W étant des constantes pouvant être prédéterminées et V la vitesse de déplacement.

8. Indicateur de direction selon l'une des revendications 1 à 7, caractérisé en ce que des moyens (34) sont prévus pour produire un signal acoustique pendant la durée de clignotement.

Fig. 1

Fig. 2

**A**

Blinker aus
Hebel in neutral

BR        BL
O         O

**B**

Hebel rechts
> 1 sek

Hebel neutral

BR        BL
●         O

**C**

Hebel links
> 1 sek

Hebel neutral

BR        BL
O         ●

Hebel rechts
< 1 sek

Hebel links
< 1 sek

Hebel rechts
> 1 sek

Hebel rechts
< 1 sek

Hebel links
< 1 sek

Hebel links
> 1 sek

**D**

BR        BL
●(v)      O

Hebel links
< 1 sek

Hebel rechts
< 1 sek

**E**

BR        BL
O         ●(v)

Fig. 3

EP 0 696 527 B1

Fig.4